# DEMANDE DE BREVET EUROPEEN

(11) **EP 1 961 617 A1**
(43) Date de publication de la demande: **27.08.2008**
(21) Numéro de dépôt: 08002924.2
(22) Date de dépôt: 18.02.2008
(51) Int. Cl.: B60R 11/02, H04B 1/08

(54) **Procédé de déverrouillage d'une façade esthétique amovible d'un appareil électronique et dispositif de déverrouillage correspondant**

(30) Priorité: 26.02.2007 FR 0701332
(71) Demandeur: Continental Automotive France, 31036 Toulouse (FR)
(72) Inventeur: Gallon, Christophe, 78120 Rambouillet (FR); Razafindrabeza, Fabrice, 78390 Bois D'Arcy (FR)

(57) **Abrégé**

L'invention concerne un procédé de déverrouillage au moyen d'un outil de démontage (1), d'au moins un mécanisme de verrouillage (2) d'une façade esthétique amovible (3) fixée sur la façade technique (41) d'un appareil électronique, ladite façade esthétique amovible comportant une ouverture (31) déjà réalisée et adaptée à recevoir un support d'écoute tel un disque compact.

Ce procédé est remarquable en ce que l'outil de démontage (1) est introduit à travers l'ouverture (31) de la façade esthétique amovible (3) dans le but de réaliser de déverrouillage du mécanisme de verrouillage (2) de la façade esthétique amovible (3) à la façade technique (41) de l'appareil électronique.

L'invention concerne également dispositif de déverrouillage mettant en oeuvre le procédé de déverrouillage.

L'invention s'applique plus particulièrement au domaine de l'automobile (autoradio).

## Description

La présente invention se rapporte au domaine de l'automobile, et plus précisément, l'invention concerne un procédé de déverrouillage d'une façade esthétique amovible d'un appareil électronique, de type autoradio. L'invention concerne également dispositif de déverrouillage mettant en oeuvre le procédé de déverrouillage.

Afin de pouvoir retirer un autoradio de son logement prévu dans le tableau de bord d'un véhicule (notamment pour l'intervention d'un opérateur en service après vente), une première solution connue consiste à munir cet autoradio de trous de déverrouillage. Ces trous permettent le passage d'un outil spécifique de démontage pour désactiver un mécanisme de verrouillage de l'autoradio au tableau de bord. L'autoradio est ensuite retiré complètement du tableau de bord par l'opérateur.

Le brevet EP1557319 (SIEMENS) décrit une telle solution. Dans ce document, la façade de l'autoradio comporte plusieurs trous de déverrouillage permettant le passage d'un outil spécifique dans le but de retirer l'autoradio du tableau de bord. Cependant, cette première solution rend inesthétique la façade de l'autoradio du fait de la présence des trous de déverrouillage visibles directement sur celle-ci.

Afin de pouvoir s'affranchir de cet effet inesthétique, dans le cadre d'une seconde solution connue, on ajoute à l'autoradio une façade esthétique amovible (un cache) permettant de masquer ces trous de déverrouillage (les trous étant réalisés sur la façade technique de l'autoradio et cachés par la façade esthétique amovible). Dans ce mode de réalisation, un bouton poussoir situé sur la façade esthétique amovible de l'autoradio permet d'actionner des moyens de déverrouillage (par exemple un clip) d'un mécanisme de verrouillage de la façade esthétique amovible à la façade technique de l'autoradio (la façade technique faisant partie intégrante du corps de l'autoradio). Une fois les moyens de déverrouillage actionnés, la façade esthétique amovible est retirée pour ensuite permettre d'enlever l'autoradio du tableau de bord grâce à l'outil spécifique.

Cependant, dans le cadre de cette seconde solution, il est nécessaire de mettre en oeuvre un bouton supplémentaire dédié à la fonction déverrouillage, ce qui pose des problèmes d'intégration et de coûts.

L'invention selon ses différents aspects a notamment pour objectif de pallier ces inconvénients de façon à cacher les trous de déverrouillage tout en évitant la mise en oeuvre d'un bouton poussoir dédié uniquement à la réalisation de la fonction déverrouillage de la façade esthétique amovible de l'autoradio.

Un autre objectif de l'invention est de fournir un dispositif de verrouillage/déverrouillage permettant de réduire les problèmes de coûts, d'encombrements et contraintes d'intégration rencontrés lors de la réalisation d'une façade esthétique amovible comportant classiquement un grand nombre de moyens (boutons, molettes...) pour réaliser des fonctions électroniques ou mécaniques.

On atteint ces buts de l'invention, ainsi que d'autres qui apparaîtront dans la suite de la présente description, grâce à un procédé de déverrouillage au moyen d'un outil de démontage d'au moins un mécanisme de verrouillage d'une façade esthétique amovible fixée sur une façade technique d'un appareil électronique, la façade esthétique amovible comportant une ouverture déjà réalisée et adaptée à recevoir un support d'écoute tel un disque compact.

Selon l'invention, ce procédé est remarquable en ce que l'outil de démontage est introduit à travers l'ouverture déjà existante, de la façade esthétique amovible, dans le but de réaliser le déverrouillage du mécanisme de verrouillage de la façade esthétique amovible à la façade technique de l'appareil électronique.

L'invention permet alors avantageusement de s'affranchir de l'utilisation d'un bouton spécifiquement dédié à la fonction déverrouillage de la façade esthétique amovible et de réduire ainsi l'encombrement des moyens de commandes (boutons, molettes,...) sur la façade esthétique amovible.

L'ouverture de la façade esthétique amovible possède alors deux fonctions distinctes :
- une première fonction permettant l'introduction du support de données (disques compacts, cassettes...) et,
- une seconde fonction permettant l'introduction de l'outil de démontage pour déverrouiller le mécanisme de verrouillage de la façade esthétique amovible à l'appareil électronique.

Particulièrement, ce procédé de déverrouillage associe à l'outil de démontage, des moyens d'éjection, pour favoriser l'éjection de la façade esthétique amovible.

L'outil de démontage possède ainsi deux fonctions distinctes :
- une première fonction permettant de déverrouiller le mécanisme de verrouillage et,
- une seconde fonction permettant de favoriser l'éjection de la façade esthétique amovible lors du retrait de l'outil de démontage par l'opérateur. En effet, après avoir déverrouillé le mécanisme de verrouillage, l'ailette d'un premier moyen de fixation (ci-après décrite) solidaire de la façade esthétique amovible et la partie active (ci-après décrite) de l'outil de démontage coopèrent. Le retrait de l'outil de démontage par l'opérateur permet ainsi de tirer sur la façade esthétique amovible pour favoriser son éjection.

L'invention concerne également un dispositif de déverrouillage mettant en oeuvre le procédé de déverrouillage tel que décrit ci-dessus, ledit dispositif étant remarquable en ce que la forme de l'ouverture de la façade esthétique amovible est adaptée pour favoriser l'insertion de l'outil de démontage (au moyen d'un détrompage mécanique (ci-après décrit), et éviter d'introduire l'outil de démontage dans le mauvais sens d'insertion. En effet, la partie active de l'outil de démontage étant située uniquement sur une face de l'outil de démontage, celle-ci doit être introduite dans le bon sens afin de venir coopérer avec l'ailette du premier moyen de fixation de la façade esthétique amovible.

Préférentiellement, la forme de l'outil de démontage est de type semi-oblongue et la forme de l'ouverture est du type oblongue.

Selon une caractéristique particulière, le mécanisme de verrouillage dudit dispositif comporte un premier moyen de fixation ménagé sur la façade esthétique amovible et un second moyen de fixation ménagé sur la façade technique appartenant à un corps d'autoradio, lesdits premier et second moyens étant prévus pour coopérer entre eux.

De manière particulière, le premier moyen de fixation comporte une ailette munie d'une surface orientée permettant à l'outil de démontage de désengager le premier moyen de fixation du second moyen de fixation lors du positionnement de la partie active de l'outil de démontage sur l'ailette.

Particulièrement, l'outil de démontage comporte une partie active venant en prise avec l'ailette du premier moyen de fixation.

D'autres objets, caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1a est une vue schématique illustrant un mécanisme de verrouillage d'une façade esthétique amovible 3 à un corps d'autoradio 4 dans le cadre d'un premier mode de réalisation de l'invention,
- la figure 1b est une vue schématique de la forme de l'ouverture de la façade esthétique amovible,
- la figure 2a est une vue schématique de la forme d'un outil de démontage,
- la figure 2b est une vue schématique du dessus de l'outil de démontage selon la flèche D de la figure 2a,
- les figures 3 (a, b, c) sont des vues schématiques illustrant les différentes étapes de l'introduction de l'outil de démontage à travers l'ouverture de la façade esthétique amovible dans le cadre du premier mode de réalisation de l'invention,
- les figures 4 à 6 illustrent un second mode de réalisation de l'invention,
- les figures 7 à 8 illustrent un troisième mode de réalisation de l'invention.

Par la suite, on se place dans le cas d'un appareil électronique embarqué tel un autoradio lecteur de disques compacts comportant une ouverture adaptée à recevoir un support d'écoute tel un disque compact.

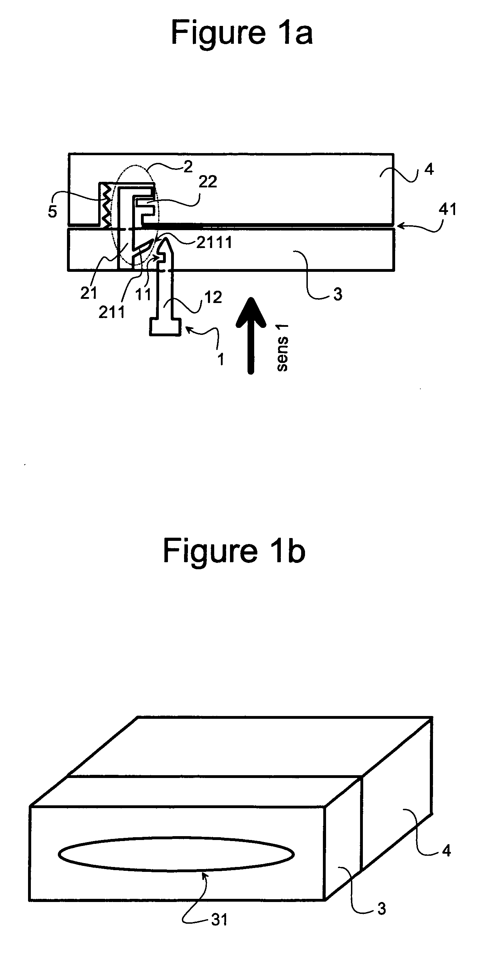

Pour mieux comprendre le principe de l'invention, on se réfère aux figures 1 à 3 où l'on a représenté un premier mode de réalisation de l'invention illustrant un corps d'autoradio 4 muni d'une façade technique 41 (figure 1a). Une façade esthétique amovible 3 comportant une multitude de boutons (non représentés) est fixée sur le corps d'autoradio 4. La façade esthétique amovible 3 comporte également une ouverture 31 (figure 1b) de forme oblongue. Une membrane élastique (non représentée) est disposée entre la façade esthétique amovible 3 et la façade technique 41. Cette membrane comporte, de manière connue en soi, une multitude de parties conductrices placées au niveau des boutons de la façade esthétique amovible 3 afin de réaliser les différents contacts électriques sur le circuit imprimé (non représenté) placé en arrière de la façade technique 41.

Comme déjà énoncé, pour avoir accès à des trous (non représentés) permettant de retirer le corps d'autoradio 4 du tableau de bord de véhicule (non représenté) au moyen d'un outil spécifique, il est nécessaire de déverrouiller la façade esthétique amovible 3. L'invention propose une solution technique pour déverrouiller cette façade esthétique.

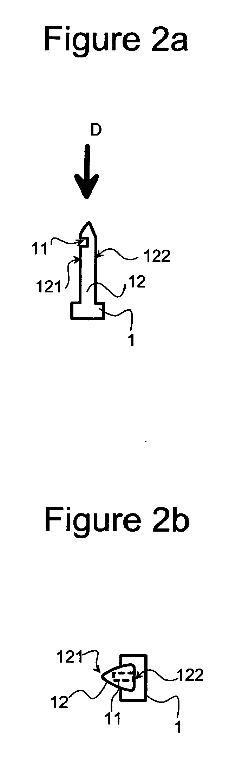

Selon l'invention, on introduit perpendiculairement à la façade esthétique amovible 3 au moins un outil de démontage 1 à travers l'ouverture 31. L'outil de démontage 1 (figure 2a) comporte une tige 12 permettant à l'opérateur de le saisir aisément et une partie active 11 de forme sensiblement rectangulaire, venant coopérer avec un premier moyen de fixation 21 (figure 1a) du mécanisme de verrouillage 2 de la façade esthétique amovible 3 au corps d'autoradio 4, dans le but d'éjecter la façade esthétique amovible 3.

Préférentiellement, la forme de la tige 12 présente une face semi-oblongue 121 (figure 2b) de dimensions similaires à la forme oblongue de l'ouverture 31 de la façade esthétique amovible 3. La tige 12 présente également une face plane 122 dont le rôle sera décrit par la suite. La partie active 11 réalisée sur l'extrémité de l'outil de démontage 1 dans la face semi-oblongue 121 (figure 2a) permet d'actionner perpendiculairement à la façade esthétique amovible 3 des premier et second moyens de fixation 21, 22 du mécanisme de verrouillage 2. Le premier moyen de fixation 21 est ménagé sur la façade esthétique amovible 3 et le second moyen de fixation 22 est ménagé sur le corps 4 de l'autoradio (figure 1a). Afin que la partie active 11 de l'outil de démontage 1 soit correctement présentée au mécanisme de verrouillage 2, l'invention propose d'utiliser la forme de la face semi-oblongue 121 comme détrompage mécanique (figures 1b, 2a et 2b). Pour avoir accès au mécanisme de verrouillage 2, l'outil de démontage 1 peut ainsi être inséré uniquement de manière à ce que la face semi-oblongue 121 s'insère dans la forme oblongue de l'ouverture 31. Les faces 121 et 122 de l'outil de démontage 1 jouent ainsi un rôle de détrompage mécanique.

Le premier moyen de fixation 21 est en forme de crochet et vient s'accrocher sur le second moyen de fixation 22 en forme d'ergot (l'ergot appartenant au corps 4 de l'autoradio). Inversement, le premier moyen de fixation 21 peut bien entendu être en forme d'ergot et le second moyen de fixation 22 en forme de crochet. Pour déverrouiller le mécanisme de verrouillage 2, l'outil de démontage 1 est inséré perpendiculairement à la façade esthétique amovible 3 (sens 1 de la figure 1a) à travers l'ouverture 31 (normalement destinée à l'introduction d'un disque compact) pour ensuite venir appuyer sur le premier moyen de fixation 21 par l'intermédiaire d'une ailette 211 faisant partie intégrante du premier moyen de fixation 21.

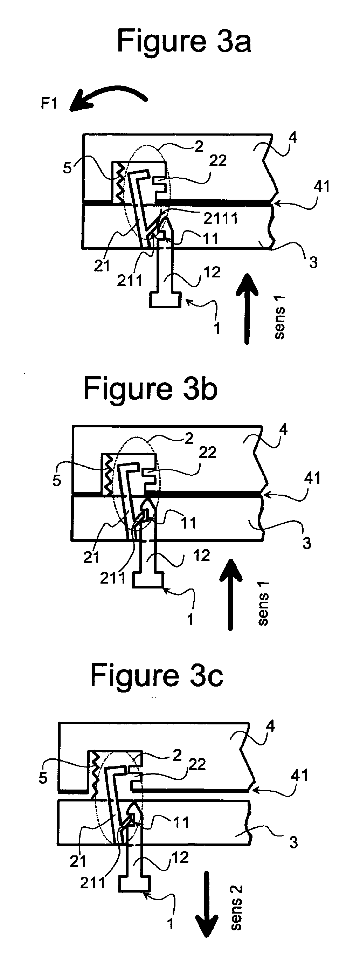

Dès l'insertion (figures 3a à 3c), l'outil de démontage 1 appuie sur l'ailette 211 au niveau d'une surface orientée 2111 ménagée sur l'ailette 211. Cet appui provoque le basculement du premier moyen de fixation 21 vers la gauche (flèche F1 de la figure 3a) pour désengager le premier moyen de fixation 21 du second moyen de fixation 22 (figures 3a, 3b). Le déverrouillage du mécanisme de verrouillage 2 terminé (figure 3b), la partie active 11 de l'outil de démontage 1 coopère ensuite avec l'ailette 211 du premier moyen de fixation 21. L'outil de démontage 1 et l'ailette 211 sont alors solidaires en mouvement. En effet, le premier moyen de fixation 21 est alors bloqué par l'outil de démontage 1 tout en étant désolidarisé du deuxième moyen de fixation 22. Lorsque l'opérateur retire l'outil de démontage 1 (sens 2, figure 3c), la partie active 11 de l'outil de démontage 1 entraîne l'ailette 211, et donc le premier moyen de fixation 21. La façade esthétique amovible 3 étant solidaire du premier moyen de fixation 21, celle-ci peut ainsi être retirée en même temps que l'outil de démontage.

L'outil de démontage 1 possède ainsi deux fonctions : une fonction de déverrouillage du mécanisme de verrouillage 2 et une fonction d'aide à l'éjection de la façade esthétique amovible 3.

Optionnellement, le corps 4 de l'autoradio comporte des moyens d'éjection 5 (figure 1a) de la façade esthétique amovible 3, comme par exemple des ressorts favorisant, en plus de l'action de l'outil de démontage 1, l'éjection de la façade esthétique amovible 3.

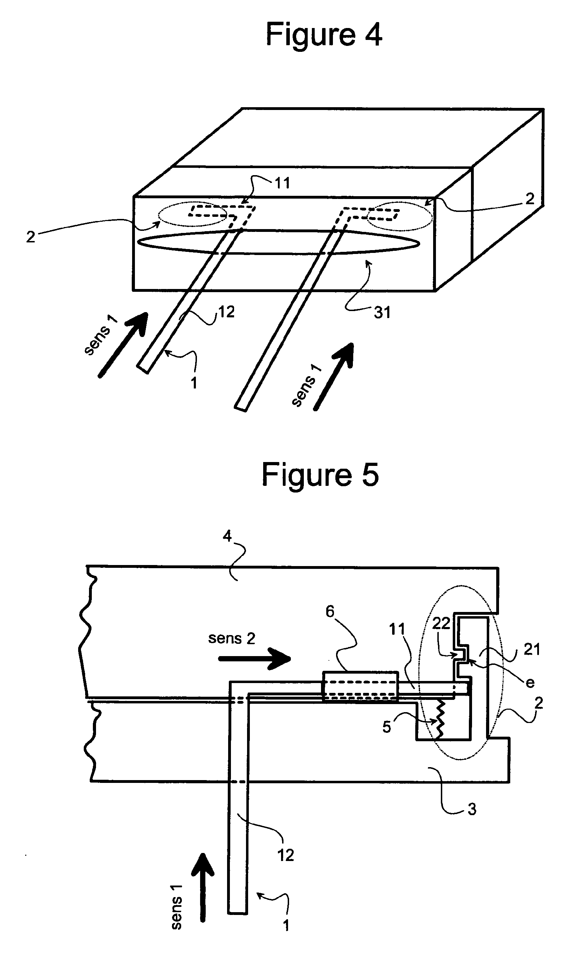

Un second mode de réalisation de l'invention (figures 4 à 6) consiste en l'utilisation d'au moins un outil de démontage 1 en forme de crochet. Cet outil comporte en effet, une tige 12 et une partie active 11 en forme de crochet (figure 4). L'outil de démontage 1 est introduit, comme précédemment, perpendiculairement (sens 1 de la figure 5) à la façade esthétique amovible 3 dans un premier temps puis est déplacé parallèlement à cette façade dans un second temps (sens 2 de la figure 5). Comme précédemment, l'outil de démontage 1 est introduit à travers une ouverture 31 déjà existante et réalisée dans la façade esthétique amovible 3.

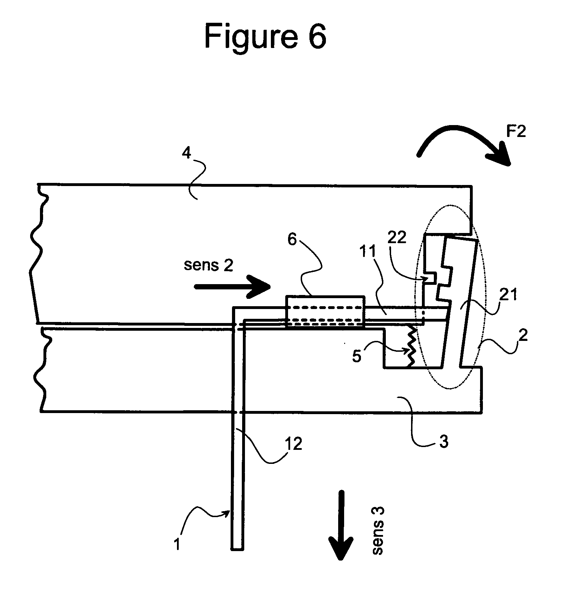

Dans un troisième temps, l'outil de démontage 1 est déplacé parallèlement à la façade esthétique amovible 3 (sens 2 de la figure 5) jusqu'à venir appuyer sur le(s) premiers moyen(s) de fixation 21 solidaire(s) de la façade esthétique amovible 3. Il est à noter que l'outil de démontage 1 est guidé en translation parallèlement à la façade esthétique amovible 3 au moyen d'un guide 6 solidaire de cette dernière. Dès que l'outil de démontage 1 vient au contact du premier moyen de fixation 21, ce dernier se déplace vers la droite (sens de la flèche F2, figure 6) puis se désengage du second moyen de fixation 22 (permettant de fixer le corps 4 de l'autoradio à la façade esthétique amovible 3). De préférence, le mécanisme de verrouillage 2 consiste en l'insertion d'un élément mâle (tel un ergot du second moyen de fixation 22) dans un élément femelle (telle une encoche e dans le premier moyen de fixation 21). La façade esthétique amovible 3 est libérée du corps 4 de l'autoradio dès lors que le mécanisme de verrouillage 2 est mécaniquement déverrouillé (figure 6).

Dans un quatrième temps, le retrait de l'outil de démontage 1 par l'opérateur (sens 3 de la figure 6) favorise l'éjection de la façade esthétique amovible 3. En effet, outre le déverrouillage du mécanisme de verrouillage 2, l'outil de démontage 1 (lors de son retrait - sens 3 de la figure 6) permet de retirer la façade esthétique amovible 3. Il est à noter que le guide 6 et l'outil de démontage 1 sont solidaires en mouvement.

L'outil de démontage 1 possède ainsi deux fonctions : une fonction de déverrouillage du mécanisme de verrouillage 2 et une fonction d'éjection de la façade esthétique amovible 3.

Optionnellement, le corps 4 de l'autoradio comporte des moyens d'éjection 5 de la façade esthétique amovible 3, comme par exemple des ressorts favorisant, en plus de l'action de l'outil de démontage 1, l'éjection de la façade esthétique amovible 3.

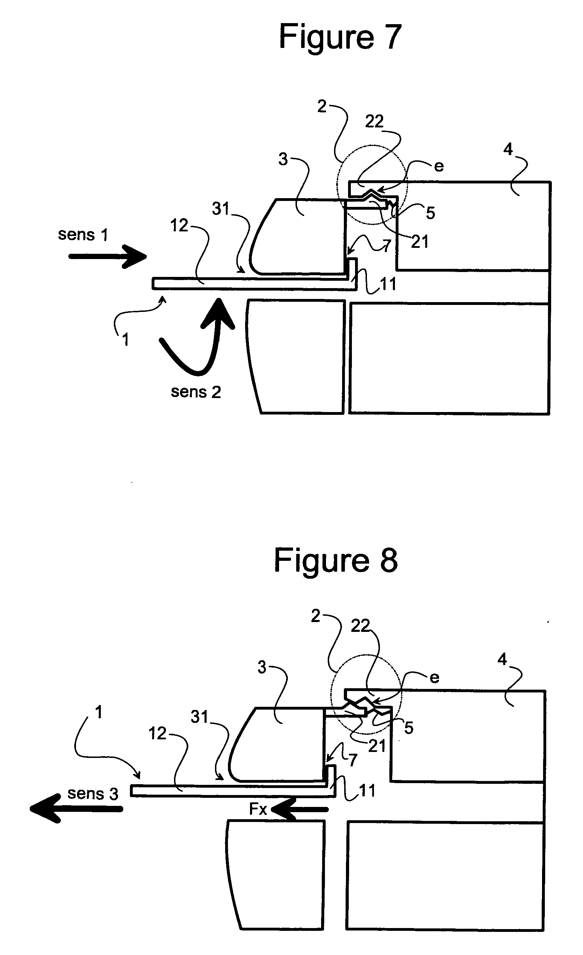

Un troisième mode de réalisation de l'invention (figures 7 et 8), met en oeuvre au moins un outil de démontage 1 comportant une tige 12 ainsi qu'une partie active 11 en forme de crochet (figure 7). Cependant dans le cadre de ce mode de réalisation, la crochet coopère directement avec une face interne 7 de la façade esthétique amovible 3, et non avec le mécanisme de verrouillage 2. Comme précédemment, l'outil de démontage 1 est introduit par une ouverture 31 déjà réalisée dans la façade esthétique amovible 3. Particulièrement, l'outil de démontage 1 est inséré perpendiculairement à l'ouverture 31 de la façade esthétique amovible 3 (sens "1" de la figure 7) pour ensuite, une fois inséré dans l'ouverture 31, être entraîné en rotation dans le sens "2" par l'opérateur. La partie active 11 de l'outil de démontage 1 vient alors appuyer sur une face interne 7 de la façade esthétique amovible 3. Cette face interne 7 se situe au voisinage de la partie de façade esthétique amovible 3 entourant l'ouverture 31 (figure 7).

Comme cela a été précisé et contrairement aux deux autres modes de réalisation précédents, l'outil de démontage 1 vient directement en prise sur la face interne 7 de la façade esthétique amovible 3 et non avec un mécanisme de verrouillage 2.

Au moyen de l'outil de démontage 1, l'opérateur vient ensuite exercer sur la façade esthétique amovible 3 une force Fx dirigée vers la gauche (sens 3, figure 8) pour déverrouiller le mécanisme de verrouillage 2 composé d'au moins un premier et un second moyen de fixation 21, 22 de la façade esthétique amovible 3 au corps 4 de l'autoradio. Le premier moyen de fixation 21 ménagé sur la façade esthétique amovible 3 est en forme d'ergot coopérant avec le second moyen de fixation 22 composé d'une encoche e (figures 7 et 8). L'action de l'outil de démontage 1 sur le mécanisme de verrouillage 2 se fait alors indirectement au moyen de la force Fx exercée par l'outil de démontage 1 sur la face interne 7. L'effort nécessaire à la désolidarisation des premier et second moyens de fixation 21, 22 est ainsi appliqué directement sur la façade esthétique amovible 3, contrairement aux deux cas précédents où l'outil de démontage 1 agit sur un mécanisme de verrouillage 2. Comme précédemment, la façade esthétique amovible 3 est ensuite retirée en même temps l'outil de démontage 1 (sens 3, figure 8).

Optionnellement, le corps 4 de l'autoradio comporte des moyens d'éjection 5 de la façade esthétique amovible 3, comme par exemple des ressorts pour favoriser, en plus de l'action de l'outil de démontage 1, l'éjection de la façade esthétique amovible 3.

Bien entendu, la présente invention ne se limite pas aux formes de réalisation préférentielles décrites ci-dessus à titre d'exemples non limitatif.

## Revendications

1. Procédé de déverrouillage au moyen d'un outil de démontage (1), d'au moins un mécanisme de verrouillage (2) d'une façade esthétique amovible (3) fixée sur une façade technique (41) d'un appareil électronique, ladite façade esthétique amovible comportant une ouverture (31) déjà réalisée et adaptée à recevoir un support d'écoute tel un disque compact, ledit procédé étant **caractérisé en ce qu'**il consiste à introduire l'outil de démontage (1) à travers l'ouverture (31) de la façade esthétique amovible (3) dans le but de réaliser le déverrouillage du mécanisme de verrouillage (2) de la façade esthétique amovible (3) à la façade technique (41) du corps de l'appareil électronique.

2. Procédé de déverrouillage selon la revendication 1 **caractérisé en ce qu'**il consiste en outre à utiliser l'outil de démontage (1) pour favoriser l'éjection de la façade esthétique amovible (3).

3. Procédé de déverrouillage selon la revendication 1 **caractérisé en ce qu'**il consiste en outre à utiliser des moyens d'éjection (5) pour favoriser l'éjection de la façade esthétique amovible (3).

4. Dispositif de déverrouillage mettant en oeuvre le procédé de déverrouillage selon la revendication 1 **caractérisé en ce que** la forme de l'ouverture (31) de la façade technique amovible (3) est adaptée pour coopérer avec une face (121) de l'outil de démontage (1) pour favoriser l'insertion dudit outil de démontage.

5. Dispositif de déverrouillage selon la revendication 4 **caractérisé en ce que** la forme de l'ouverture (31) est du type oblongue.

6. Dispositif de déverrouillage selon la revendication 4 **caractérisé en ce que** la forme de l'outil de démontage (1) est du type semi-oblongue.

7. Dispositif de déverrouillage selon la revendication 4 **caractérisé en ce que** le mécanisme de verrouillage (2) dudit dispositif comporte un premier moyen de fixation (21) ménagé sur la façade esthétique amovible (3) et un second moyen de fixation (22) ménagé sur la façade technique (41) appartenant à un corps (4) d'autoradio.

8. Dispositif de déverrouillage selon la revendication 7 **caractérisé en ce que** le premier moyen de fixation (21) comporte une ailette (211).

9. Dispositif de déverrouillage selon les revendications 4 à 8 **caractérisé en ce que** l'outil de démontage (1) comporte une partie active (11) venant en prise avec l'ailette (211) du premier moyen de fixation (21).

10. Dispositif de déverrouillage selon la revendication 9 **caractérisé en ce que** l'ailette (211) comporte une surface orientée (2111), ladite surface orientée permettant à l'outil de démontage (1) de désengager le premier moyen de fixation (21) du second moyen de fixation (22) lors du positionnement de la partie active (11) de l'outil de démontage (1) sur l'ailette (211).
